# EUROPÄISCHE PATENTSCHRIFT

(11) **EP 1 464 471 B1**
(45) Veröffentlichungstag und Bekanntmachung des Hinweises auf die Patenterteilung: **02.08.2006**
(21) Anmeldenummer: 03007748.1
(22) Anmeldetag: 04.04.2003
(51) Int. Cl.: B29C 65/20

(54) **Verfahren und Vorrichtung zum überlappenden Verschweissen von flächigen Kunststoffmaterialien**
Process and apparatus for overlapping joining of flat plastic materials
Procédé et dispositif pour le soudage par recouvrement de matériaux plastiques plats

(43) Veröffentlichungstag der Anmeldung: 06.10.2004
(73) Patentinhaber: Leister Process Technologies, 6060 Sarnen (CH)
(72) Erfinder: Zurmühle, Walter, 6056 Kägiswil (CH); Zimmerli, Paul, 6056 Kägiswil (CH)
(74) Vertreter: Klocke, Peter

(56) Entgegenhaltungen:
- DE-A- 3 537 244
- DE-C- 3 921 711
- DE-C- 19 813 625

## Beschreibung

Die vorliegende Erfindung betrifft ein Verfahren zum überlappenden Verschweißen von flächigen Kunststoffmaterialien mittels eines Heizkeils, der zwischen der oberen und der unteren Materialbahn bewegt wird und die Materialien erwärmt, wobei die Materialbahnen nach dem Erwärmen und Anschmelzen zusammengeführt und miteinander verpresst werden. Die Erfindung betrifft außerdem ein Schweißgerät zum überlappenden Verschweißen von flächigen Kunststoffmaterialien mit einem von Rollen getragenen und angetriebenen Fahrgestell, wobei wenigstens eine der Rollen als Andrückrolle zum Zusammenpressen der heiß miteinander in Kontakt gebrachten Materialien ausgebildet ist, und eine Heizeinrichtung, die zwischen die Materialbahnen bringbar ist, und die Materialbahnen auf den einander zugewandten Seiten beim Kontaktieren aufschmilzt, sowie die Verwendung einer Führungsschiene für derartige Schweißgeräte.

Zum Verschweißen von Planen aus beschichtetem Gewebe, Folien und Dichtungsbahnen aus PVC-P, PE, ECB, CSPE, EPDM, PVDF usw. sowie PE-beschichtete Bändchengewebe für Lastwagen, Zelte, Abdeckungen in der Landwirtschaft, Biotope, Schwimmbäder, Markisen, Bootsplanen, aufblasbare Boote, Werbeplanen usw. wird das eingangs beschriebene Verfahren angewandt und derartige Schweißgeräte eingesetzt. Weitere ähnliche Materialien kommen im Tiefbau, Dachbau oder bei Fußböden vor. Im Nachfolgenden werden die vorstehend beschriebenen Kunststoffmaterialien allgemein als Materialbahnen bezeichnet. Die Materialbahnen werden zum Verschweißen überlappend angeordnet, so dass in einem Überlappungsbereich die beiden Materialbahnen aufeinanderliegen und als eine obere Materialbahn und eine untere Materialbahn bezeichnet werden. Es ist auch möglich, dass die miteinander zu verschweißenden Materialbahnen auf Stoß gelegt werden und ein Streifen, der beide untere Lagen in einem Überlappungsbereich überdeckt, mit der jeweils unteren Materialbahn verschweißt wird.

Die Schweißgeräte können dabei als Heizeinrichtung einen Heizkeil, der üblicherweise direkt elektrisch beheizt wird, oder eine zwischen den Materialien anzuordnende Heizdüse, die mit Heißluft erhitzt wird, aufweisen. Insbesondere bei den Heizkeilschweißgeräten und den dabei angewendeten Verfahren ist es erforderlich, die zu verschweißenden Materialien anzuheben, um beidseitig der zu verschweißenden Materialien mittels Andrückrollen nach dem Verschweißen die Materialbahnen mit ausreichender Kraft zusammenzupressen. Beispiele für diesen Maschinentyp und das dabei angewendete Verfahren sind der DE 42 30 882 C2 oder der US 5 865 942 A1 zu entnehmen. Bei dieser Methode und den dafür eingesetzten Schweißgeräten ist es nachteilig, dass durch das Anheben der Materialbahnen diese einerseits Falten bilden können, die Schweißnaht beeinträchtigen, und darüber hinaus die Gefahr des Verziehens der Materialbahnen besteht. Des Weiteren wird die Handhabung des Schweißgeräts durch die teilweise relativ dicken und starren Materialbahnen beim Anheben dieser Materialbahnen erschwert.

DE 19 813 625 C1 zeigt ein Verfahren nach dem Oberbegriff des Anspruches 1 und eine Vorrichtung nach dem Oberbegriff des Anspruches 8.

Der vorliegenden Erfindung liegt daher die Aufgabe zugrunde, ein Verfahren und eine Vorrichtung vorzuschlagen, mit der das Verschweißen derartiger Materialbahnen verbessert und die Handhabung erleichtert wird.

Diese Aufgabe wird erfindungsgemäß durch ein Verfahren mit den Merkmalen des Verfahrensanspruchs und durch ein Schweißgerät mit den Merkmalen des Vorrichtungsanspruchs gelöst. Weitere vorteilhafte Ausgestaltungen sind den jeweiligen rückbezogenen Unteransprüchen zu entnehmen.

Nach dem erfindungsgemäßen Verfahren werden die zu verschweißenden Materialbahnen zumindest in dem zu verschweißenden Überlappungsbereich auf einem flächigen festen Untergrund ausgelegt. Der flächige feste Untergrund kann dabei ein Arbeitstisch, der Fußboden oder ein sonstiger geeigneter nicht nachgiebiger Untergrund sein. Selbstverständlich kann er auch eine Neigung aufweisen. Der Heizkeil wird durch Anheben der oberen Materialbahn zwischen die Materialbahnen gebracht und entlang mindestens einem zu verschweißenden Rand der Materialbahnen bewegt. Dabei wird der Heizkeil auf der auf dem ebenen Untergrund liegenden unteren Materialbahn entlang bewegt und die zusammengeführten Materialbahnen werden mittels einer Andrückrolle gegen den ebenen Untergrund zusammengepresst.

Bei dem erfindungsgemäßen Verfahren ist es somit nicht mehr erforderlich, beide Materialbahnen anzuheben. Durch das Anheben der oberen Materialbahn im wesentlichen nur soweit, dass der Heizkeil zwischen die Materialbahnen gelangen kann, ist die Anhebehöhe wesentlich geringer als bei dem bisher angewendeten Verfahren und Vorrichtungen. Infolgedessen kann eine wesentlich bessere faltenfreiere Schweißnaht hergestellt werden. Die Gefahr des Verziehens der Materialbahnen ist durch die geringe Höhe nicht mehr gegeben. Überraschenderweise ist es mit diesem Verfahren möglich, durch Bewegen des Heizkeils über die untere Materialbahn auch hier eine ausreichende Aufschmelzung zu Erreichen und im Anschluss daran eine feste Verbindung der beiden Materialbahnen herzustellen.

Grundsätzlich ist es möglich, dass der flächige feste Untergrund entweder nicht völlig eben ist, sondern verschiedene flächige Niveauhöhen aufweist, oder, trotz aller Sorgfalt, sich kleine punktuelle Unebenheiten auf diesem befinden. Um genau zu dies zu umgehen, wurden die aus dem Stand der Technik bekannten Verfahren verwendet und entsprechende Schweißgeräte eingesetzt. Gemäß einer bevorzugten Ausbildung des Verfahrens wird daher der Heizkeil bei der Bewegung über die untere Materialbahn bei Unebenheiten unter dieser ohne Kontaktverlust in vertikaler Richtung bewegt. Durch eine schwimmende Lagerung können derartige geringfügigen Unebenheiten unter der unteren Materialbahn durch den Heizkeil ausgeglichen werden. Ergänzend hierzu wird über eine federnd gelagerte Niederhalterolle, die die obere Materialbahn gegen Oberseiten des Heizkeils drückt, der Heizkeil auf die untere Materialbahn gedrückt. Damit ist gewährleistet, dass beide Materialbahnen ausreichend von dem Heizkeil kontaktiert und damit erwärmt werden und gleichzeitig auf Veränderungen des Untergrunds automatisch reagiert werden kann.

Für die Durchführung des Verfahrens wird vorteilhafterweise der Heizkeil aus einer Standby-Stellung in eine Schweißstellung verstellt. In der Schweißstellung wird der Heizkeil mit seiner Spitze zwischen den Materialbahnen nahe an die Andrückrolle bewegt und auf der unteren Materialbahn gehalten. Damit werden die für den Verbindungsprozess zwischen den Materialbahnen erforderlichen Parameter eingehalten, indem die Materialien gleich nach dem Zusammenführen mit einer Andrückrolle gegen den Untergrund zusammengepresst werden.

Vorteilhafterweise erfolgt dies derart, dass der Heizkeil aus der Standby-Stellung, in der er üblicherweise bereits erhitzt, jedoch doch noch nicht in der Schweißposition gehalten wird, in eine erste Zwischenstellung nahe über der unteren Materialbahn gebracht wird. Dann wird die obere Materialbahn angehoben und der Schweißkeil in einer zweiten Zwischenstellung ohne Druck auf die untere Materialbahn zwischen die obere und die untere Materialbahn bewegt wird. Abschließend wird der Heizkeil in Heizkeillängsrichtung in die vorstehend beschriebene Schweißstellung gebracht. In dieser findet die volle Kontaktierung der oberen und der unteren Materialbahn mit der Ober- und Unterseite des Heizkeils statt.

Gemäß einer weiteren bevorzugten Ausbildung des Verfahrens wird bei Erreichen der Schweißstellung automatisch der Schweißvorgang gestartet und der Heizkeil entlang der zu verschweißenden Materialbahn geführt. Entsprechend erfolgt umgekehrt eine Beendigung der Bewegung des Heizkeils relativ zu den Materialbahnen und damit eine Beendigung des Schweißvorgangs, wenn der Heizkeil aus der Schweißstellung herausbewegt wird. Die Bewegung des Heizkeils in der Standby-Stellung zur Schweißstellung erfolgt üblicherweise manuell durch den Bediener, jedoch kann auch ein entsprechender Motorantrieb vorgesehen sein.

In der Praxis ist es üblich, um zu vermeiden, dass die Heizeinheit das Material verschiebt, die Materialien zu tackern oder mit einem doppelten Isolierband vorher miteinander zu verkleben. Gemäß einer weiter bevorzugten Ausbildung erfolgt die Fixierung der Materialbahnen nur in dem Bereich um den Heizkeil während des Schweißvorganges, während die Materialbahnen in dem Bereich, in dem gerade nicht geschweißt wird, nicht festgehalten werden. Vorzugsweise geschieht dies mittels einer auf der oberen Materialbahn aufgelegten, verlängerbaren Schiene, die genau während des Schweißvorganges im Bereich des Heizkeils niedergedrückt wird. Das Niederdrücken erfolgt dabei in einem gewissen Abstand zu dem zu verschweißenden Rand der Materialbahn und auf eine gewisse Länge vor und hinter dem Heizkeil. Durch die Verlängerbarkeit der Schiene, beispielsweise durch eine zweite Schiene, kann ein kontinuierlicher Ablauf über die gesamte Materialbahn durch immer wieder erneutes Ansetzen der gerade frei gewordenen Schiene erreicht werden.

Das erfindungsgemäße Schweißgerät umfasst eine Einrichtung zum Tragen und Bewegen der Heizeinrichtung in Form eines Heizkeils von einer von der Andrückrolle fernen Standby-Stellung zu einer nahe an der Andrückrolle und sich auf der unteren Materialbahn befindenden Schweißstellung sowie eine Einrichtung zum federnden Drücken des Heizkeils in der Schweißstellung auf die untere Materialbahn. Die Einrichtung zum Tragen und Bewegen des Heizkeils kann dabei aus verschiedenen Konstruktionen, je nach Aufbau des Fahrgestells bestehen, die es ermöglichen, den Heizkeil aus der Standby-Stellung in die Schweißstellung zu bringen. Die Einrichtung zum federnden Drücken des Heizkeils kann den Heizkeil direkt oder indirekt über die obere Materialbahn auf die untere Materialbahn drücken.

Gemäß einer bevorzugten Ausbildung der Einrichtung zum Tragen und Bewegen des Heizkeils weist diese Mittel auf, um den Heizkeil sowohl in Heizkeillängsrichtung als auch quer zu dieser zu bewegen. Diese Mittel bewirken somit während der Bewegung des Heizkeils aus der Standby-Stellung in die Schweißstellung gleichzeitig zu der Bewegung in Längsrichtung auch gezielte Querbewegungen.

Gemäß einer bevorzugten Ausbildung des Schweißgeräts weist die Einrichtung zum Tragen und Bewegen des Heizkeils einen Haltearm auf, an dessen stirnseitigem Ende der Heizkeil angeordnet ist. Dieser Haltearm ist gemäß einer weiteren vorteilhaften Ausgestaltung mit einer Führungsnut versehen, in die ein Führungszapfen eingreift. Die Führungsnut mündet in eine Führungsöffnung mit Führungskanten, so dass der Führungszapfen beim Eindringen in die Führungsöffnung eine Bewegung des Haltearms quer zur Längsrichtung des Heizkeils veranlasst. Entsprechend ausgestaltete Führungskanten in der Führungsöffnung bewirken die gewünschte Bewegung des an dem Ende des Haltearmes angebrachten Führungskeil in verschiedene Stellungen.

Zusätzlich ist zweckmäßigerweise an dem Haltearm eine Einrichtung zum Starten der Vorwärtsbewegung des Schweißgeräts angeordnet. Diese bewirkt auch ein Anhalten des Schweißgerätes, wenn der Heizkeil aus der Schweißstellung gelangt.

Gemäß einer besonders bevorzugten Ausgestaltung der Erfindung umfasst die Einrichtung zum federnden Drücken des Heizkeils auf die untere Materialbahn eine Andrückeinrichtung zum Andrücken der oberen Materialbahn auf den Heizkeil. Dabei ist die Andrückeinrichtung vorzugsweise als eine in vertikaler Richtung federnd einstellbare Niederhalterolle ausgebildet, die gleichzeitig über die obere Materialbahn auch den Heizkeil gegen die untere Materialbahn drückt. Lagerelemente für den Heizkeil erlauben eine beschränkte Bewegung des Heizkeils in vertikaler Richtung, um damit auf Unebenheiten unter der unter Materialbahn reagieren zu können. Die Bewegungen in vertikaler Richtung des Heizkeils ermöglichen damit ein Absenken oder Anheben des Heizkeils oder der Spitze oder ein seitliches Kippen.

Um eine ausreichende Kontaktierung mit den Materialbahnen zu gewährleisten, ist die obere Heizkontaktfläche des Heizkeils bogenförmig und die untere Heizkontaktfläche eben. Vorzugsweise ist die untere Heizkontaktfläche länger als die obere ausgebildet, um bei Unebenheiten, die eventuell ein kurzzeitiges Lösen der Heizkontaktfläche in gewissen Bereichen von der unteren Materialbahn bewirken, über die Länge der Heizstrecke trotzdem für eine ausreichende Aufschmelzung zu sorgen.

Gemäß einer weiteren vorteilhaften Ausgestaltung weist das Heizgerät eine Führungseinrichtung auf, die auf eine auf den Materialbahnen aufliegende Schiene drückt. Diese Führungseinrichtung und die zugehörige Schiene können selbstverständlich nicht nur bei einem Schweißgerät mit Heizkeil, sondern auch bei einem Schweißgerät mit Heißlufteinrichtung und Schweißdüse eingesetzt werden. Die Schiene, beispielsweise mit einer Länge von 2 m maximal, kann dabei so ausgebildet sein, dass durch Aneinanderreihen von zwei derartigen Schienen ein kontinuierlicher Lauf des Schweißgeräts entlang der Materialbahnen möglich ist. Durch das Gewicht des Schweißgeräts wird die Schiene gerade in dem Bereich, in dem der Heizkeil sich befindet, auf die Materialbahnen gedrückt, so dass hier ein Verziehen oder eine Faltenbildung schlecht möglich ist. Vorzugsweise ist daher die Führungseinrichtung auf der der Heizeinrichtung gegenüberliegenden Seite des Fahrgestells angeordnet und weist geeignete Rollen auf, die auf die Schiene drücken.

Die Aufgabe wird daher auch durch eine spezielle Verwendung der Führungsschiene beim überlappenden Verschweißen von flächigen Kunststoffmaterialien mit einem von Rollen getragenen und angetriebenen Fahrgestell und einem Heizelement zum Fixieren der Materialbahnen gelöst, in dem während des Schweißvorganges gegen ein Verziehen, vorzugsweise in dem Bereich um das Heizelement, während des Schweißvorganges durch das Gewicht des Fahrgestells die Materialbahnen niedergedrückt werden.

Durch die Erfindung wird somit eine Möglichkeit angegeben, mit der Schweißungen mit besserer Qualität als bisher durchgeführt werden können. Darüber hinaus ist der Schweißvorgang mit weniger Kraftaufwand zu bewerkstelligen.

Nachfolgend wird die Erfindung anhand eines Ausführungsbeispiels in Verbindung mit den begleitenden Zeichnungen näher erläutert. Es stellen dar:
- Figur 1: die perspektivische Ansicht eines Schweißgerätes mit Haltearm und Schweißkeil in Standby-Stellung;
- Figur 2: die Draufsicht auf das Schweißgerät in der Standby-Stellung;
- Figur 3: eine zweite perspektivische Ansicht ohne Gehäuse in mit Haltearm und Schweißkeil in Standby-Stellung;
- Figur 4: eine Seitenansicht ohne Gehäuse mit Haltearm und Heizkeil in der ersten Zwischenstellung;
- Figur 5: die Draufsicht auf Haltearm und Heizkeil in der ersten Zwischenstellung
- Figur 6: Seitenansicht ohne Gehäuse mit Haltearm und Heizkeil in der zweiten Zwischenstellung;
- Figur 7: die Draufsicht auf Haltearm und Heizkeil in der zweiten Zwischenstellung
- Figur 8: die Ansicht gemäß Figur 1 mit Haltearm und Heizkeil in der Schweißstellung;
- Figur 9: die Seitenansicht des Schweißgeräts mit Haltearm und Heizkeil in der Schweißstellung;
- Figur 10: die Draufsicht auf das Schweißgerät mit Haltearm und Heizkeil in der Schweißstellung;
- Figur 11: die perspektivische Ansicht des Schweißgeräts von der dem Heizkeil gegenüberliegenden Seite mit der Führungseinrichtung und der auf den Folien aufliegenden Schiene; und
- Figur 12: die vergrößerte Seitenansicht eines Heizkeils mit Halteblech.

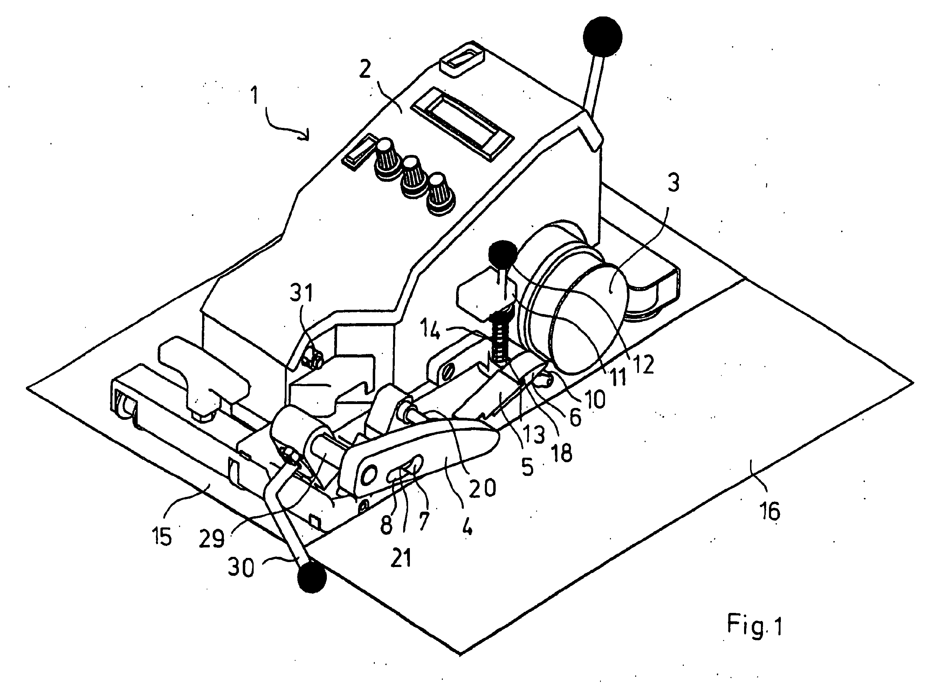

In Figur 1 ist das Schweißgerät 1 mit dem Gehäuse 2 und der Andrückrolle 3, die gleichzeitig auch Antriebsrolle ist, dargestellt. Der grundsätzliche Aufbau derartiger Schweißgeräte ist allgemein bekannt und wird im Nachfolgenden nicht weiter beschrieben. An dem Gehäuse 2 ist ein Haltearm 4 angeordnet, der an seinem einen Ende über ein Halteblech 5 den Heizkeil 6 trägt. Der Heizkeil 6 wird in üblicher Art und Weise elektrisch beheizt und enthält dazu die erforderlichen Zuleitungen und Einrichtungen, die dem Fachmann bekannt und daher nicht weiter diskutiert werden. Der Heizkeil 6 (Figur 12) ist über Zapfen 17 in länglichen vertikalen Ösen 18 des Halteblechs 5 gelagert, um kontrollierte Bewegungen in vertikaler Richtung aufgrund von Unebenheiten ausführen zu können. Der Heizkeil 6 weist eine gebogene, obere Heizkontaktfläche 22 und eine untere, ebene Heizkontaktfläche 23 auf. Letztere ist länger als die obere Heizkontaktfläche 22.

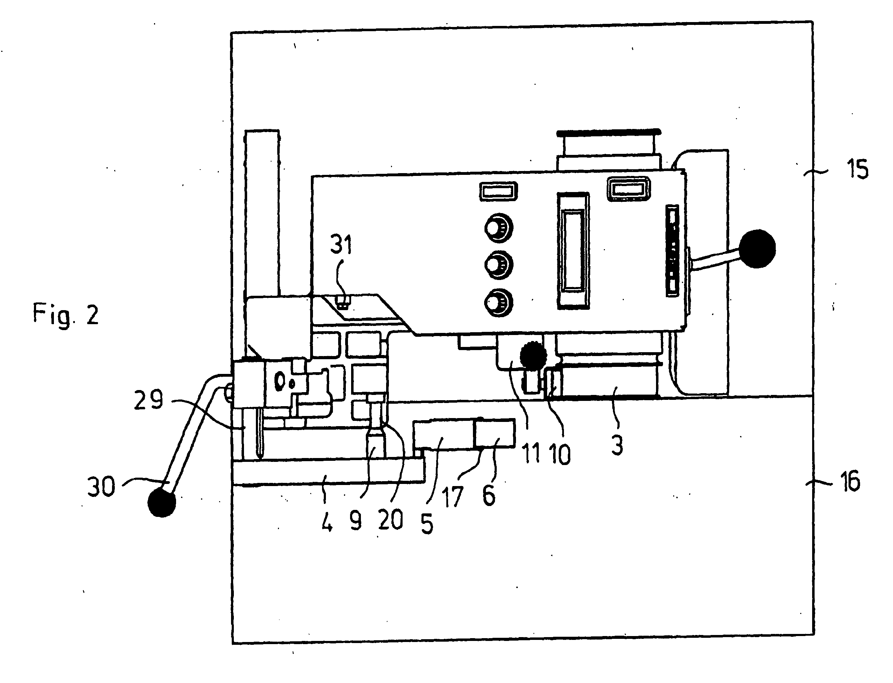

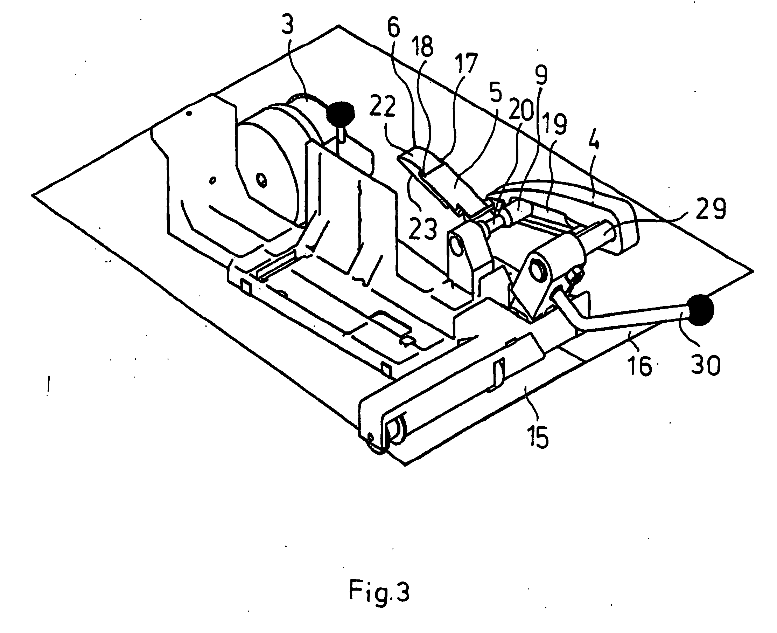

Die Figur 1 und die Figuren 2 und 3 zeigen den Haltearm 4 in der Standby-Stellung, so dass der Heizkeil 6 entfernt von der Andrückrolle 3 sich befindet. In der Standby-Stellung befindet sich der Heizkeil 6 seitlich oberhalb der oberen Materialbahn 15. Wie aus den Figuren ersichtlich, ist in diesem Ausführungsbeispiel der Heizkeil 6 gegenüber dem Haltearm abgewinkelt. In dem Haltearm 4 befindet sich eine Öffnung 7, mit Kanten 8, die der Führung bei der Bewegung des Haltearms 4 durch einen in der Figur 3 dargestellten starren Führungszapfen 9, der eine Verjüngung 20 aufweist, dienen. Der Führungszapfen 9 greift in eine in dem Haltearm 4 angeordnete Führungsnut 19 ein und wird durch diese geführt. Durch die Verjüngung 20 des Führungszapfens 9 kann der Führungszapfen 9, wenn er sich in dem Bereich 21 der Öffnung 7 befindet, nicht aus der Gehäuse nahen Stellung gelangen und bewirkt außerdem eine Absenkung des Haltearms 4, da dieser dann durch den verjüngten Bereich 20 geführt wird.

Mit dem Betätigungshebel 30 wird über eine Zahnstange 29 in diesem Ausführungsbeispiel von Hand die Bewegung des Haltearms 4 in die einzelnen nachfolgen beschriebenen weiteren Stellungen vorgenommen. In der Schweißstellung ist die Zahnstange 29 dann in einer Position, in der sie gegen den Schalter 31 am Gehäuse 2 drückt und damit den Vorschub über die Andrückrolle einleitet bzw. umgekehrt abstellt.

Mit den Bezugsziffern 15 und 16 sind die obere Materialbahn bzw. die untere Materialbahn bezeichnet. In der Nähe der Andrückrolle 3 befindet sich eine Niederhalterolle 10, die über einen federnd gelagerten Niederhalter 11 auf die obere Materialbahn 15 gedrückt wird. Der Niederhalter 11 weist eine obere Schraube 12 zur Einstellung der Position und eine untere Schraube 13 zur Einstellung der Anpresskraft über die Feder 14 auf.

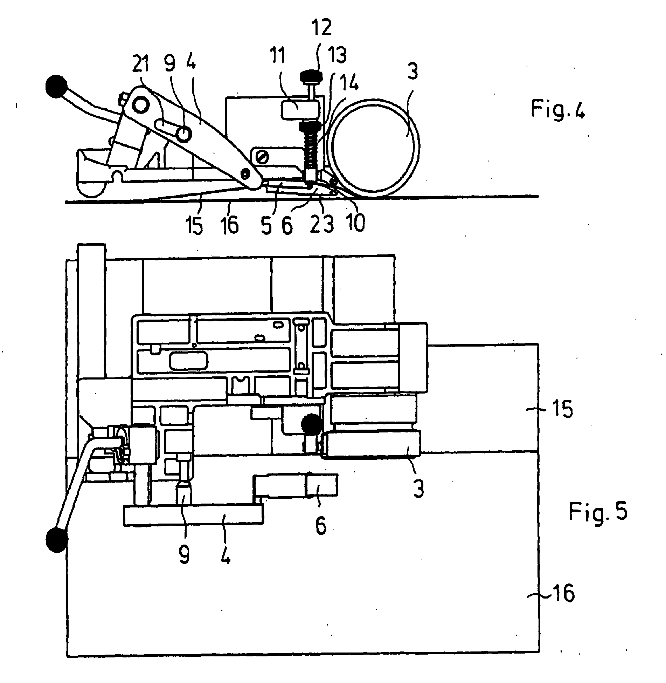

Die Figuren 4 und 5 zeigen den Haltearm 4 mit dem Heizkeil 6 in der ersten Zwischenstellung. In dieser Zwischenstellung befindet sich der Heizkeil 6 nahe über der unteren Materialbahn 16, ohne jedoch diese zu berühren, jedoch weiterhin seitlich der oberen Materialbahn 15. Der Führungszapfen 9 ist in dieser Stellung am Ende der Führungsnut 19 vor der Öffnung 7.

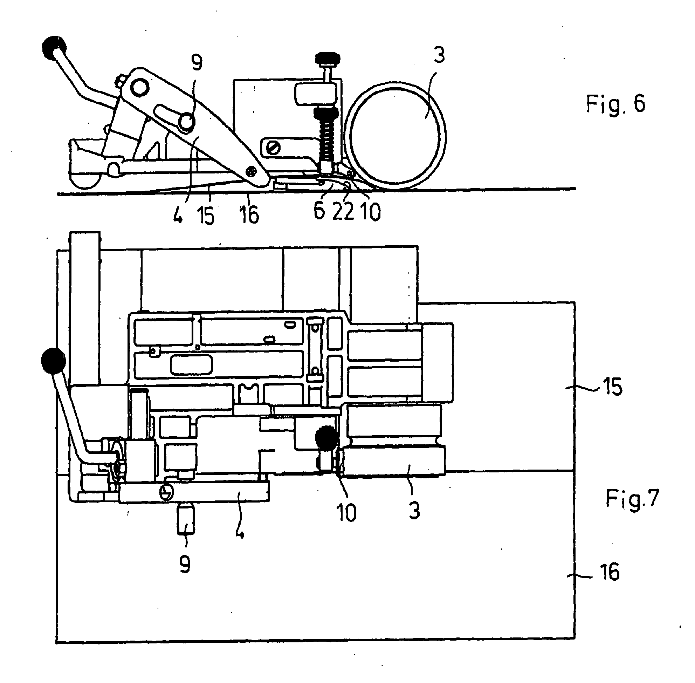

In den Figuren 6 und 7 ist der Führungszapfen 9 mit seiner vollen Länge durch die Öffnung 7 hindurchgetreten, so dass der Haltearm 4 mit dem Heizkeil 6 sich in Richtung Gehäuse 2 bewegt und durch die Verjüngung 20 abgesenkt hat. Die Figur 6 und 7 zeigen die zweite Zwischenstellung, bei der sich der Heizkeil 6 zwischen der oberen Materialbahn 15 und der unteren Materialbahn 16 befindet, ohne dass die obere Materialbahn 15 bereits auf die Oberseite des Heizkeils 6 gedrückt wird. Der Heizkeil 6 liegt bereits auf der unteren Materialbahn 16 auf. Die Niederhalterolle 10 ist noch nicht auf den Heizkeil 6 eingestellt, so dass die obere Materialbahn 15 noch von der oberen Heizkontaktfläche 22 des Heizkeils 6 abgehoben ist.

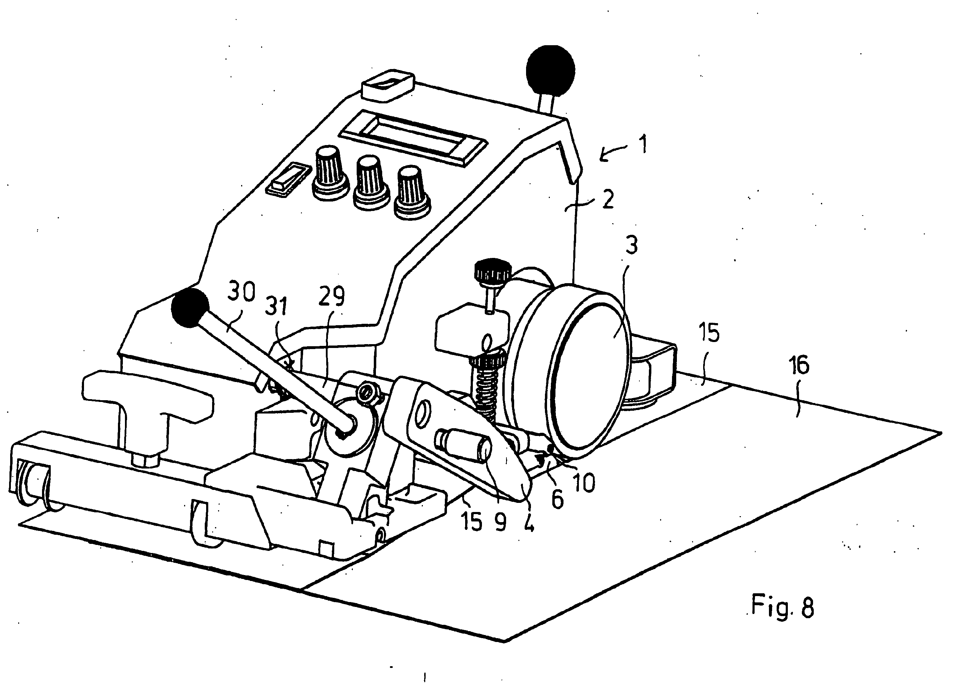

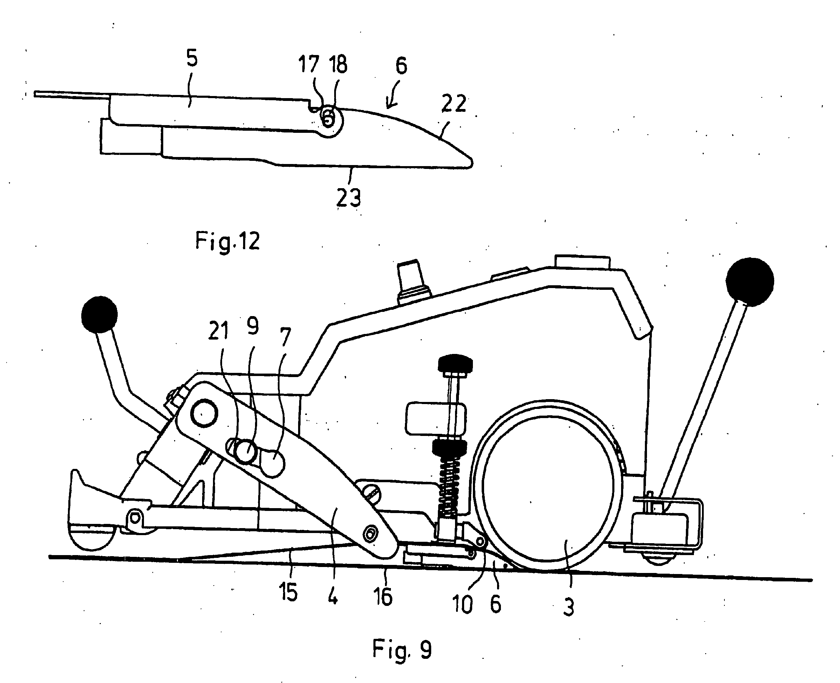

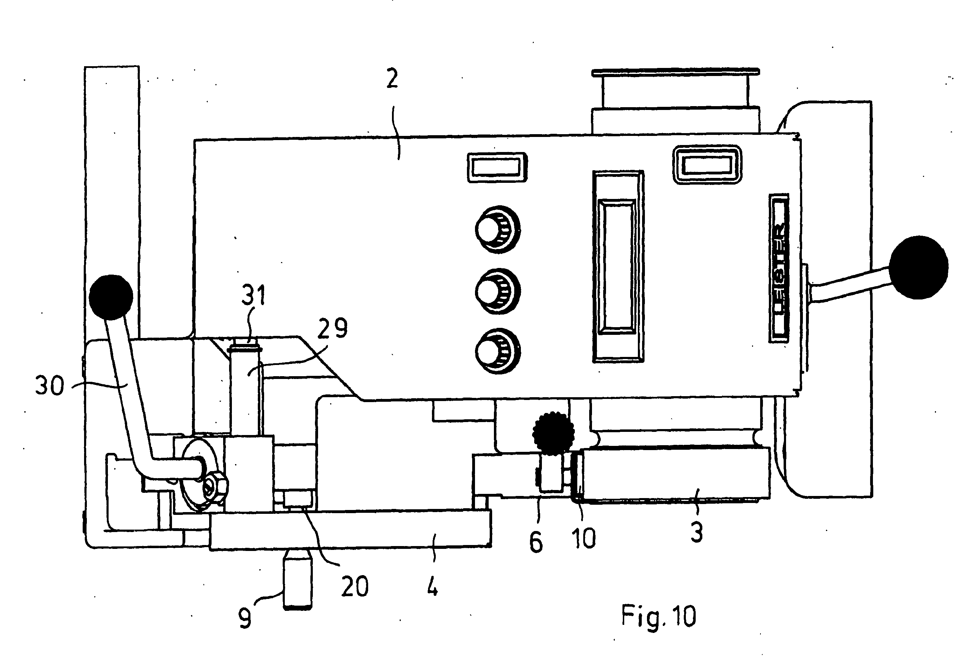

In den Figuren 8 bis 10 schließlich befindet sich der Heizkeil 6 mit möglichst geringem Spalt zwischen dem Heizkeil 6 und der Andrückrolle 3 nahe an der Andrückrolle 3. Die Niederhalterolle 10 presst die obere Materialbahn 15 auf die Oberseite des Heizkeils 6 und damit diesen gegen die untere Materialbahn 16. Der Führungszapfen 9 befindet sich nun am Ende des Bereichs 21. Mit Erreichen dieser Endstellung wird auch durch die Zahnstange 29 der Schalter 31 betätigt und der Vorschub des Gehäuses 2 über eine nicht dargestellte Steuer-/Regeleinrichtung den Antrieb eingeschaltet. Die Führungskanten 8 bewirken die gewünschte Bahn des Heizkeils 6 in diesem Bereich. Die Steuer-/Regeleinrichtung regelt in der bekannten und allgemein üblichen Art und Weise die Temperatur des Heizkeils und der sonstigen für den Schweißvorgang erforderlichen Parameter.

Die Zapfen 17 in den Ösen 18 des Halteblechs 5 können sich nach oben bewegen, um aufgrund von Unebenheiten ein Spielraum zur Verfügung zu stellen, in dem der Heizkeil 6 die untere Materialbahn 16 kontaktierend, sich anpassen kann. Dabei kann er auch in geringem Maße seitlich oder in Längsrichtung kippen.

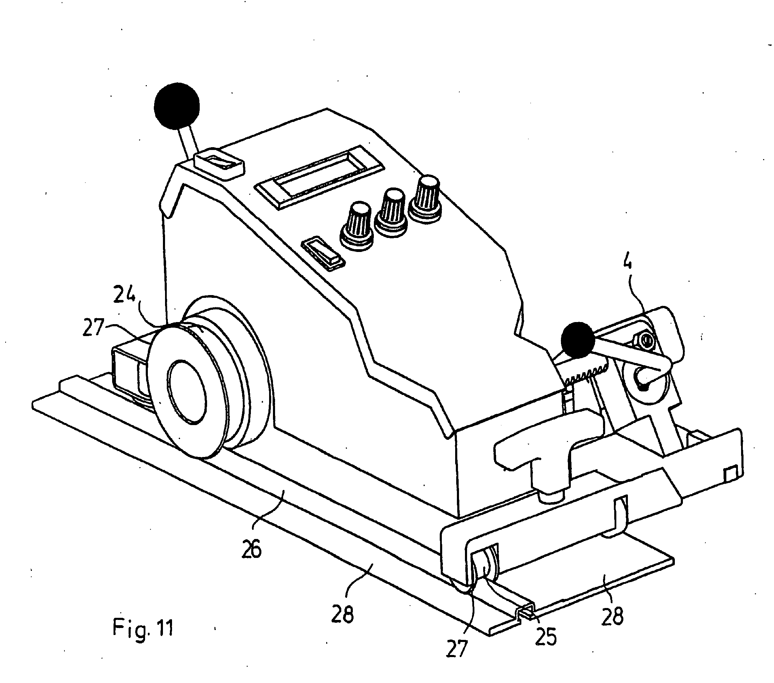

Figur 11 zeigt die auf der anderen Seite des Gehäuses angeordnete Führungsrollen 24 und 25, die auf eine auf der oberen Materialbahn 15 (hier nicht dargestellt) aufliegenden Führungsschiene 26 entlang fahren. In dem Ausführungsbeispiel sind die Führungsrollen 24 und 25 nicht angetrieben. Sie weisen einen Rand 27 auf, der ein Abrutschen von der Führungsschiene 26 verhindern. In dem Ausführungsbeispiel laufen die Führungsrollen 24 und 25 auf einer quaderförmigen Führungsschiene 26 mit seitlich daran anschließenden Auflageflächen. Genauso ist es möglich, eine Führungsschiene mit einer mehr oder weniger tiefliegenden Rille vorzusehen, in denen Führungsrollen laufen.

## Patentansprüche

1. Verfahren zum überlappenden Verschweißen von flächigen Kunststoffmaterialien mittels einer Heizeinrichtung (6), der zwischen der oberen und der unteren Materialbahn (15, 16) bewegt wird und die Materialien erwärmt, indem die zu verschweißenden Materialbahnen (15, 16) zumindest in dem zu verschweißenden Überlappungsbereich auf einem flächigen festen Untergrund ausgelegt werden, die Heizeinrichtung (6) durch Anheben der oberen Materialbahn (15) zwischen die Materialbahnen gebracht wird, und die Heizeinrichtung (6) entlang mindestens einem zu verschweißenden Rand der Materialbahnen (15, 16) bewegt wird, die Materialbahnen (15, 16) nach dem Erwärmen und Anschmelzen zusammengeführt und mittels einer Andrückrolle (3) gegen den ebenen Untergrund zusammengepresst werden, **dadurch gekennzeichnet, dass** als Heizeinrichtung ein Heizkeil (6) verwendet wird, der auf der auf dem flächigen festen Untergrund liegenden unteren Materialbahn (16) entlang bewegt und bei Unebenheiten in oder unter der unteren Materialbahn (16) ohne Kontaktverlust in vertikaler Richtung bewegt wird.

2. Verfahren nach Anspruch 1, **dadurch gekennzeichnet, dass** der Heizkeil (6) über eine federnd gelagerte Niederhalterolle (10), die die obere Materialbahn (15) gegen die Oberseite (22) des Heizkeils (6) drückt, auf die untere Materialbahn (16) gedrückt wird.

3. Verfahren nach einem der vorangegangenen Ansprüche, **dadurch gekennzeichnet, dass** der Heizkeil (6) aus einer Standby-Stellung in eine Schweißstellung verstellt wird, wobei der Heizkeil (6) mit seiner Spitze zwischen den Materialbahnen (15, 16) nahe an die Andrückrolle (3) bewegt und auf der unteren Materialbahn (16) gehalten wird.

4. Verfahren nach Anspruch 3, **dadurch gekennzeichnet, dass** die obere Materialbahn (15) angehoben und der Heizkeil (6) aus der Standby-Stellung in eine Zwischenstettung nahe über der unteren Materialbahn (16) zwischen die obere und die untere Materialbahn bewegt, und anschließend in die Schweißstellung auf der unteren Materialbahn (16) gebracht wird.

5. Verfahren nach Anspruch 4, **dadurch gekennzeichnet, dass** bei Erreichen der Schweißstellung der Schweißvorgang mit der Bewegung des Heizkeils (6) entlang der Materialbahnen (15, 16) gestartet oder umgekehrt angehalten wird.

6. Verfahren nach einem der vorangegangenen Ansprüche, **dadurch gekennzeichnet, dass** die Materialbahnen (15, 16) während des Schweißvorganges gegen ein Verziehen, vorzugsweise in dem Bereich um den Heizkeil, fixiert werden.

7. Verfahren nach Anspruch 6, **dadurch gekennzeichnet, dass** die Fixierung mittels einer auf der oberen Materialbahn aufgelegten, verlängerbaren Schiene (26) erfolgt, die während des Schweißvorganges durch ein den Schweißvorgang durchführendes Schweißgerät (1) niedergedrückt wird.

8. Schweißgerät zum überlappenden Verschweißen von flächigen Kunststoffmaterialien mit einem von Rollen getragenen und angetriebenen Fahrgestell (2), wobei wenigsten eine der Rollen als Andrückrolle (3) zum Zusammenpressen der heiß miteinander in Kontakt gebrachten Materialbahnen (15, 16) ausgebildet ist, einer Heizeinrichtung (6), die zwischen die Materialbahnen (15, 16) bringbar ist und die Materialbahnen auf den einander zugewandten Seiten beim Kontaktieren aufschmilzt, **gekennzeichnet durch** eine Einrichtung (4, 5. 7, 8, 9, 19, 20) zum Tragen und Bewegen der Heizeinrichtung (6) in Form eines Heizkeils (6) von einer von der Andrückrolle (3) fernen Standby-Stellung zu einer nahe an der Andrückrolle (3) und auf der unteren Materialbahn (16) befindlichen Schweißstellung und eine Einrichtung (10, 11, 14) zum federnden Drücken des Heizkeils (6) in der Schweißstellung auf die untere Materialbahn (16).

9. Schweißgerät nach Anspruch 8, **dadurch gekennzeichnet, dass** der Heizkeil (6) seitlich des Fahrgestells (2) und im wesentlichen in einer Linie mit der Andrückrolle (3) angeordnet ist.

10. Schweißgerät nach Anspruch 8 oder 9, **dadurch gekennzeichnet, dass** die Einrichtung zum Tragen und Bewegen des Heizkeils (6) Mittel zum Bewegen des Heizkeils in und quer zur Heizkeillängsrichtung umfasst.

11. Schweißgerät nach Anspruch 10, **dadurch gekennzeichnet, dass** die Einrichtung zum Tragen und Bewegen des Heizkeils einen Halteann (4) aufweist, an dessen stirnseitigen Ende der Heizkeil (6) angeordnet ist.

12. Schweißgerät nach Anspruch 11, **dadurch gekennzeichnet, dass** in dem Haltearm (3) eine Führungsnut (19), die in eine Führungsöffnung (7) mit Führungskanten (8) mündet, angeordnet ist, und in die Führungsnut (19) ein Führungszapfen (9) eingreift.

13. Schweißgerät nach einen der vorangegangenen Ansprüche 8 bis 12, **dadurch gekennzeichnet, dass** an dem Haltearm (3) eine Einrichtung zum Starten der Vorwärtsbewegung des Schweißgeräts (1) bei Erreichen der Schweißstellung, oder umgekehrt, angeordnet ist.

14. Schweißgerät nach einem der vorangegangenen Ansprüche 8 bis 13, **dadurch gekennzeichnet, dass** die Einrichtung zum federnden Drücken des Heizkeils (6) auf die untere Materialbahn (16) eine Andrückeinrichtung zum Andrücken der oberen Materialbahn (15) auf den Heizkeil (6) umfasst, wobei die Andrückeinrichtung, vorzugsweise eine in vertikaler Richtung federn einstellbare Niederhalterolle (10), gleichzeitig über die obere Materialbahn (15) auch den Heizkeil (6) gegen die untere Materialbahn (15) drückt und Lagerelemente (17, 18) eine Bewegung in vertikaler Richtung erlauben.

15. Schweißgerät nach einem der vorangegangenen Ansprüche 8 bis 14, **dadurch gekennzeichnet, dass** der Heizkeil (6) eine bogenförmige obere und eine untere ebene Heizkontaktfläche (22, 23) aufweist.

16. Schweißgerät nach Anspruch 15, **dadurch gekennzeichnet, dass** die untere Heizkontaktfläche (23) länger als die obere ist.

17. Schweißgerät nach einem der vorangegangenen Ansprüche 8 bis 15, **dadurch gekennzeichnet, dass** eine Führungseinrichtung (24, 25), die auf eine auf den Materialbahnen (15, 16) aufliegende Führungsschiene (27) drückt, an dem Fahrgestell (2) angeordnet ist.

18. Verwendung einer Führungsschiene (27) beim überlappenden Verschweißen von flächigen Kunststoffmaterialien mit einem von Rollen getragenen und angetriebenen Fahrgestell (2) und einem Heizelement (6) zum Fixieren der Materialbahnen (15, 16) während des Schweißvorganges gegen ein Verziehen, vorzugsweise in dem Bereich um das Heizelement (6) durch Niederdrücken während des Schweißvorganges durch das Gewicht des Fahrgestells (6).

## Claims

1. A method for the overlapping welding of sheet-like plastic materials by means of a heating device (6) which is moved between the upper and the lower material web (15, 16) and heats the materials, wherein the material webs (15, 16) to be welded are laid out, at least in the overlapping region to be welded, the heating device (6) is introduced between the material webs by the upper material web (15) being lifted, and the heating device (6) is moved along at least one edge of the material webs (15, 16) which is to be welded, the material webs (15, 16), after heating and fusing, being combined and being pressed together, and the combined material webs being pressed together against the planar base by means of a pressure roller (3), **characterised in that** the heating device is a heating wedge (6), which is moved along on the lower material web (16) lying on the sheet-like firm base, and in the event of unevennesses in or below the lower material web (16) is moved in the vertical direction without loss of contact.

2. The method as claimed in claim 1, **characterised in that** the heating wedge (6) is pressed onto the lower material web (16) via a resiliently mounted holding-down roller (10) which presses the upper material web (15) against the top side (22) of the heating wedge (6).

3. The method as claimed in one of the preceding claims, **characterised in that** the heating wedge (6) is adjusted out of a standby position into a welding position, the heating wedge (6) being moved with its tip between the material webs (15, 16) and near to the pressure roller (3) and being held on the lower material web (16).

4. The method as claimed in claim 3, **characterised in that** the heating wedge (6) is brought out of the standby position into a first intermediate position near to and above the lower material web (16), the upper material web (15) is then lifted and, in a second intermediate position, the welding wedge (6) is moved, without pressure on the lower material web (16), between the upper and lower material web and is thereafter brought in the longitudinal direction of the heating wedge into the welding position.

5. The method as claimed in claim 4, **characterised in that**, when the welding position is reached, the welding operation is started or, conversely, stopped with the movement of the heating wedge (6) along the material webs (15, 16).

6. The method as claimed in one of the preceding claims, **characterised in that**, during the welding operation, the material webs (15, 16) are fixed against distortion, preferably in the region around the heating wedge.

7. The method as claimed in claim 6, **characterised in that** fixing takes place by means of an extendable rail (26) which is laid on the upper material web and which, during the welding operation, is pressed down by a welding appliance (1) carrying out the welding operation.

8. A welding apparatus for the overlapping welding of sheet-like plastic materials, with a carriage (2) carried and driven by rollers, at least one of the rollers being designed as a pressure roller (3) for pressing together the material webs (15, 16) brought, hot, into contact with one another, and with a heating device (6) which can be introduced between the material webs (15, 16) and which, during contacting, fuses the material webs on the sides facing one another, **characterised by** a device (4, 5, 7, 8, 9, 19, 20) for carrying and moving the heating device (6) in the form of a heating wedge (6) from a standby position remote from the pressure roller (3) to a welding position located near to the pressure roller (3) and on the lower material web (16) and a device (10, 11, 14) for pressing the heating wedge (6) resiliently onto the lower material web (16) in the welding position.

9. The welding apparatus as claimed in claim 8, **characterised in that** the welding wedge (6) is arranged lateral to the carriage (2) and essentially in line with the pressure roller (3).

10. The welding apparatus as claimed in claim 8 or 9, **characterised in that in that** the device for carrying and moving the heating wedge (6) comprises means for moving and heating wedge in and transversely to the longitudinal direction of the heating wedge.

11. The welding apparatus as claimed in claim 10, **characterised in that** has a holding arm (4), at the front end of which the heating wedge (6) is arranged.

12. The welding apparatus as claimed in claim 11, **characterised in that** in the holding arm (3) is arranged a guide slot (19) which issues into a guide orifice (7) with guide edges (8), and a guide pin (9) engages into the guide slot (19).

13. The welding apparatus as claimed in one of the preceding claims 8 to 12, **characterised in that** a device for starting the forward movement of the welding appliance (1) when the welding position is reached, or vice versa, is arranged on the holding arm (3).

14. The welding apparatus as claimed in one of the preceding claims 8 to 13, **characterised in that** the device for pressing the heating wedge (6) resiliently onto the lower material web (16) comprises a pressure device for pressing the upper material web (15) onto the heating wedge (6), the pressure device, preferably a holding-down roller (10) adjustable resiliently in the vertical direction, at the same time also pressing the heating wedge (6) against the lower material web (15) via the upper material web (15), and bearing elements (17, 18) allowing a movement in the vertical direction.

15. The welding apparatus as claimed in one of the preceding claims 8 to 14, **characterised in that** the heating wedge (6) has an arcuate upper and a planar lower heating contact surface (22, 23).

16. The welding apparatus as claimed in claim 15, **characterised in that** the lower heating contact surface (23) is longer than the upper one.

17. The welding apparatus as claimed in one of the preceding claims 8 to 15, **characterised in that** a guide device (24, 25), which presses onto a guide rail (27) lying on the material webs (15, 16), is arranged on the carriage (2).

18. The use of a guide rail (27) in the overlapping welding of sheet-like plastic materials, with a carriage (2) carried and driven by rollers and with a heating element (6), for fixing the material webs (15, 16) during the welding operation against distortion, preferably in the region around the heating element (6), by pressing down by means of the weight of the carriage (6) during the welding operation.

## Revendications

1. Procédé pour le soudage par recouvrement de matériaux plastiques plats au moyen d'un dispositif de chauffage (6) qui est déplacé entre la bande de matériau supérieure et la bande de matériau inférieure (15, 16) et chauffe les matériaux, par le fait que les bandes de matériau à souder (15, 16) sont disposées sur un fond plat solide au moins dans la zone de recouvrement à souder, que le dispositif de chauffage (6) est amené entre les bandes de matériau par levage de la bande de matériau supérieure (15) et est déplacé le long d'au moins un bord à souder des bandes de matériau (15, 16), que les bandes de matériau (15, 16) sont rassemblées après le chauffage et la fusion et sont pressées contre le fond plat au moyen d'un rouleau presseur (3), **caractérisé en ce qu'**un coin chauffant (6) est utilisé comme dispositif de chauffage, lequel est déplacé le long de la bande de matériau inférieure (16) placée sur le fond solide plat et est déplacée dans le sens vertical en cas de bosses dans ou sous la bande de matériau inférieure (16) sans perte de contact.

2. Procédé selon la revendication 1, **caractérisé en ce que** le coin chauffant (6) est pressé sur la bande de matériau inférieure (16) par le biais d'un contre-galet (10) logé sur ressort, qui presse la bande de matériau supérieure (15) contre le côté supérieur (22) du coin chauffant (6).

3. Procédé selon l'une quelconque des revendications précédentes, **caractérisé en ce que** le coin chauffant (6) est réglé en position de soudure à partir d'une position d'attente, sachant que le coin chauffant (6) est déplacé avec sa pointe entre les bandes de matériau (15, 16) près du rouleau presseur (3) et maintenu sur la bande de matériau inférieure (16).

4. Procédé selon la revendication 3, **caractérisé en ce que** la bande de matériau supérieure (15) est levée et **en ce que** le coin chauffant (6) est déplacé à partir de la position d'attente dans une position intermédiaire juste au-dessus de la bande de matériau inférieure (16) entre la bande de matériau supérieure et inférieure et est amenée ensuite dans la position de soudage sur la bande de matériau inférieure (16).

5. Procédé selon la revendication 4, **caractérisé en ce que**, lorsque la position de soudage est atteinte, l'opération de soudage est démarrée ou au contraire arrêtée avec le mouvement du coin chauffant (6) le long des bandes de matériau (15, 16).

6. Procédé selon l'une quelconque des revendications précédentes, **caractérisé en ce que** les bandes de matériau (15, 16) sont fixées pendant l'opération de soudage contre une distorsion, de préférence dans la zone autour du coin chauffant.

7. Procédé selon la revendication 6, **caractérisé en ce que** la fixation s'effectue au moyen d'un rail (26) prolongeable placé sur la bande de matériau supérieure, qui est poussé vers le bas pendant l'opération de soudage par un appareil de soudage (1) réalisant l'opération de soudage.

8. Dispositif de soudage pour le soudage par recouvrement de matériaux plastiques plats avec un châssis (2) porté et entraîné par des rouleaux, un des rouleaux au moins étant configuré comme rouleau presseur (3) pour presser ensemble les bandes de matériau (15, 16) mises en contact à chaud l'une avec l'autre, avec un dispositif de chauffage (6) pouvant être amené entre les bandes de matériau (15, 16) et qui fait fondre par contact les bandes de matériau sur les côtés tournés l'un vers l'autre, **caractérisé par** un dispositif (4, 5, 7, 8, 9, 19, 20) pour porter et déplacer le dispositif de chauffage (6) en forme d'un coin chauffant (6) depuis une position d'attente éloignée du rouleau presseur (3) vers une position de soudage se trouvant à proximité d'un rouleau presseur (3) et sur la bande de matériau inférieure (16) et par un dispositif (10, 11, 14) pour la pression à ressort du coin chauffant (6) dans la position de soudage sur la bande de matériau inférieure (16).

9. Dispositif de soudage selon la revendication 8, **caractérisé en ce que** le coin chauffant (6) est disposé sur le côté du châssis (2) et essentiellement dans l'alignement du rouleau presseur (3).

10. Dispositif de soudage selon la revendication 8 ou 9, **caractérisé en ce que** le dispositif pour porter et déplacer le coin chauffant (6) comprend des moyens pour déplacer le coin chauffant dans la direction longitudinale du coin chauffant et transversalement à celle-ci.

11. Dispositif de soudage selon la revendication 10, **caractérisé en ce que** le dispositif pour porter et déplacer le coin chauffant (6) comprend un bras de support (4) à l'extrémité frontale duquel le coin chauffant (6) est disposé.

12. Dispositif de soudage selon la revendication 11, **caractérisé en ce qu'**une rainure de guidage (19), qui débouche dans une ouverture de guidage (7) avec des bords de guidage (8), est prévue dans le bras de support (3), et dans la rainure de guidage (19) engrène un tourillon de guidage (9).

13. Dispositif de soudage selon l'une quelconque des revendications précédentes 8 à 12, **caractérisé en ce qu'**un dispositif est disposé sur le bras de support (3) pour le démarrage du mouvement vers l'avant du dispositif de soudage (1) en atteignant la position de soudage ou vice-versa.

14. Dispositif de soudage selon l'une quelconque des revendications précédentes 8 à 13, **caractérisé en ce que** le dispositif de pression à ressort du coin chauffant (6) sur la bande de matériau inférieure (16) comprend un dispositif de pression pour presser la bande de matériau supérieure (15) sur le coin chauffant (6), sachant que le dispositif de pression, de préférence un galet presseur (10) réglable dans le sens vertical par ressort, presse simultanément au-dessus de la bande de matériau supérieure (15) également le coin chauffant (6) contre la bande de matériau inférieure (15) et des éléments de palier (17, 18) permettent un déplacement dans le sens vertical.

15. Dispositif de soudage selon l'une quelconque des revendications 8 à 14, **caractérisé en ce que** le coin chauffant (6) comporte une surface de contact de chauffage supérieure voûtée et une surface de contact de chauffage inférieure plane (22, 23).

16. Dispositif selon la revendication 15, **caractérisé en ce que** la surface de contact de chauffage inférieure (23) est plus longue que la surface supérieure.

17. Dispositif de soudage selon l'une quelconque des revendications précédentes 8 à 15, **caractérisé en ce qu'**un dispositif de guidage (24, 25), qui s'appuie sur un rail de guidage (27) placé sur les bandes de matériau (15, 16), est disposé sur le châssis (2).

18. Utilisation d'un rail de guidage (27) lors du soudage par recouvrement de matériaux plastiques plats avec un châssis (2) porté et entraîné par des rouleaux et un élément de chauffage (6) pour fixer les bandes de matériau (15, 16) pendant l'opération de soudage contre une distorsion de préférence dans la zone autour de l'élément de chauffage (6) par poussée vers le bas pendant l'opération de soudage par le poids du châssis (6).
